# EUROPEAN PATENT APPLICATION

(11) **EP 2 517 808 A2**
(43) Date of publication of application: **31.10.2012**
(21) Application number: 12165065.9
(22) Date of filing: 20.04.2012
(51) Int. Cl.: B22C 9/04, B29C 67/00

(54) **Process for preparing a mold for casting**

(30) Priority: 26.04.2011 US 201113094491
(71) Applicant: General Electric Company, Schenectady, NY 12345 (US)
(72) Inventor: BAILEY, Donald Mark, Greenville, SC South Carolina 29615 (US); KIM, Kwanwoo, Cincinnati, OH Ohio 45215 (US); MELTON, Patrick Benedict, Greenville, SC South Carolina 29615 (US); SULLIVAN, Michael John, Greenville, SC South Carolina 29615 (US)
(74) Representative: Cleary, Fidelma

(57) **Abstract**

A process for preparing for casting is provided and includes forming a cast component (10) defining an interior (20) having a complex and/or irregular shape, introducing a non-solid material into the cast component interior (20) and solidifying the non-solid material to form an inner shell (40), forming an outer shell (50) about the cast component (10) and removing the cast component (10) from between the inner and outer shells (40, 50).

## Description

### BACKGROUND OF THE INVENTION

The subject matter disclosed herein relates to a process for preparing for casting.

Cast components have generally been formed by any one or more of stereolithographic (SLA) processes, direct metal laser sintering (DMLS) processes and selective laser sintering (SLS) processes. SLA processes are additive manufacturing processes that use an ultraviolet (UV) laser to cure resin in the formation of a part one layer at a time. SLA models can be particularly accurate for fit and function studies where fine details are important and can be used as master patterns for casting silicone and composite tooling as well as a variety of other molding techniques. In DMLS processes, a laser fuses individual part layers together to form a part having excellent surface finish and a high level of accuracy for fine details. SLS processes use a laser to sinter a powdered nylon material layer by layer to create a durable, solid object. The sintered prototype can be used for testing in almost all applications including functional prototypes using real engineering materials. These parts display extremely high durability, heat deflection and closely represent the physical properties of the production material.

Despite the advantages provided by these processes problems persist. For example, SLA hardware has been produced with limited interior features. Indeed, in most cases the interior cavity geometry is very limited in complexity and accuracy. Meanwhile, DMLS and SLS processes can be very expensive.

### BRIEF DESCRIPTION OF THE INVENTION

According to one aspect, the invention resides in a process for preparing for casting including forming a cast component defining an interior having a complex and/or irregular shape, introducing a non-solid material into the cast component interior and solidifying the non-solid material to form an inner shell, forming an outer shell about the cast component and removing the cast component from between the inner and outer shells.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a cross-sectional schematic illustration of a formation of a cast component;
FIG. 2 is a cross-sectional schematic illustration of an introduction of a non-solid material into an interior of the cast component;
FIG. 3 is a cross-sectional schematic illustration of the non-solid material having been solidified to form an inner shell;
FIG. 4 is a cross-sectional schematic illustration of a formation of an outer shell; and
FIG. 5 is a cross-sectional schematic illustration of a removal of the cast component from between the inner and outer shells.

The detailed description explains embodiments of the invention, together with advantages and features, by way of example with reference to the drawings.

### DETAILED DESCRIPTION OF THE INVENTION

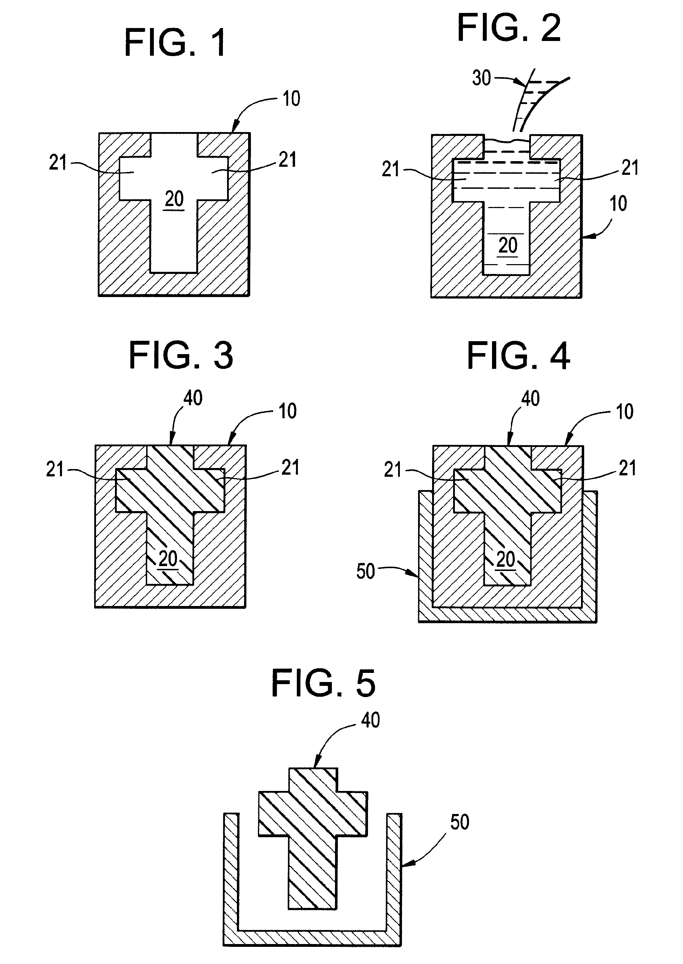

With reference to FIGS. 1-5, a process for preparing for casting is provided for formation of, for example, a swirler or swozzle component of a gas turbine engine. The process can be used to create production style swozzles/swirlers with complex interior geometries for lab test evaluation without the expense of ceramic core and wrapper die production style tooling. Limited production volumes could also utilize this concept to reduce part cost and lead time.

As shown in FIG. 1, the process includes forming a cast component 10 defining an interior 20 having a complex and/or irregular shape, such as a shape of the swirler or swozzle component or any other desired similarly complex/irregular shape. While the process described herein can be applicable for the formation of a component of any shape with any degree of complexity, the interior 20 can have a particularly complex shape with internal cavities 21 and/or other irregular features, as would be the case for swirler or swozzle components. In accordance with various embodiments, the forming of the cast component 10 may include any one or more of stereolithographic (SLA) processes, direct metal laser sintering (DMLS) processes and selective laser sintering (SLS) processes. The cast component 10 may include a plastic material or another similar type of material.

As shown in FIG. 2, a non-solid material 30 is then introduced into the cast component interior 20 to fill the cast component interior 20 and, in particular, to fill the internal cavities 21 and/or the other irregular features. The non-solid material 30 may include any one or more of ceramic slurry and powder. The introducing operation may be achieved, for example, by way of an injection of the non-solid material 30 into the cast component interior 20, a vacuum assisted injection whereby the non-solid material 30 is pulled or pressured into the cast component interior 20 and/or plugging whereby the non-solid material 30 is pushed into the cast component interior 20.

The introducing operation of FIG. 2 continues until the cast component interior 20 is filled with the non-solid material 30 and can be facilitated by various additional operations. For example, the cast component 10 may be rotated about a longitudinal axis thereof during and after the introducing operation to thereby urge filling of the internal cavities 21 and/or the other irregular features by centrifugal force. Rotation may be particularly useful where the non-solid material is the ceramic slurry. In addition, the cast component 10 may be vibrated with vibration being particularly useful where the non-solid material 30 is powdered.

As shown in FIG. 3, the non-solid material is solidified to form an inner shell 40 that matches the shape of the cast component interior 20 including the internal cavities 21 and/or the other irregular features. In this way, the inner shell 40 may also substantially match an interior shape of the part being produced. The solidifying can be achieved in various manners in accordance with a type of the non-solid material 30. For example, if the non-solid material 30 is ceramic slurry, the solidifying operation may include a heat/dry curing of the ceramic slurry to form a ceramic inner shell 40.

As shown in FIG. 4, an outer shell 50 is then formed about the cast component 10 to have a shape and size that is substantially similar to an outer surface of the cast component 10. In this way, the outer shell 50 may have a shape and a size that is also substantially similar to that of the part being produced. Formation of the outer shell 50 can be achieved by way of investment casting or other similar casting processes. The outer shell 50 may be coupled to the inner shell 40 as a result or may be separate from the inner shell 40.

As shown in FIG. 5, material of the cast component 10 is removed from between the inner shell 40 and the outer shell 50 by, for example, burning the material of the cast component 10 and washing out residual ash/waste produced by the burning from between the inner shell 40 and the outer shell 50. The inner shell 40 and the outer shell 50 thus form a finished component as a shelled and ceramic-cored prototype that is ready for, for example, an investment cast metal pour.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A process for preparing for casting, comprising:
forming a cast component (10) defining an interior (20) having a complex and/or irregular shape;
introducing a non-solid material (30) into the cast component interior (20) and solidifying the non-solid material (30) to form an inner shell (40);
forming an outer shell (50) about the cast component (10); and
removing the cast component (10) from between the inner and outer shells (40, 50).

2. The process according to claim 1, wherein the forming comprises one or more of stereolithography (SLA), direct metal laser sintering (DMLS) and selective laser sintering (SLS).

3. The process according to claim 1 or 2, wherein the cast component (10) is formed in a shape of a swozzle component of a gas turbine engine.

4. The process according to claim 1 or 2, wherein the cast component (10) is formed in a shape of a swirler component of a gas turbine engine.

5. The process according to any of claims 1 to 4, wherein the cast component (10) comprises a plastic material.

6. The process according to any of claims 1 to 5, wherein the non-solid material (30) comprises one of ceramic slurry and powder.

7. The process according to any preceding claim, wherein the introducing comprises filling the cast component interior (20) with the non-solid material (30).

8. The process according to any preceding claim, wherein the introducing comprises rotating the cast component (10) and the introduced non-solid material (30).

9. The process according to any preceding claim, wherein the forming of the outer shell (50) comprises investment casting.

10. The process according to any preceding claim, wherein the removing comprises:
burning the cast component (10); and
washing out residual ash/waste produced by the burning from between the inner and outer shells (40, 50).
